# EUROPÄISCHE PATENTANMELDUNG

(11) **EP 3 288 159 A1**
(43) Veröffentlichungstag der Anmeldung: **28.02.2018**
(21) Anmeldenummer: 16185511.9
(22) Anmeldetag: 24.08.2016
(51) Int. Cl.: H02K 15/00, H02K 17/16

(54) **KURZSCHLUSSLÄUFER INSBESONDERE FÜR HOCHDREHZAHLEN**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft einen Kurzschlussläufer (3) einer Asynchronmaschine (1) mit elektrischen Leitern, die in im Wesentlichen axial verlaufenden Nuten eines Blechpakets (5) vorgesehen sind, wobei an jeder Stirnseite des Blechpakets (5) zumindest ein Kurzschlussring vorgesehen ist, der zumindest eine vorgegebene Anzahl der elektrischen Leiter elektrisch verbindet, wobei der Kurzschlussring eine Armierung (24) aus vergleichsweise hochfesten Material aufweist.

## Beschreibung

Die Erfindung betrifft einen Kurzschlussläufer/Käfigläufer einer Asynchronmaschine mit elektrischen Leitern, die in im Wesentlichen axial verlaufenden Nuten eines Blechpakets vorgesehen sind, wobei an jeder Stirnseite des Kurzschlussläufers zumindest ein Kurzschlussring vorgesehen ist, der zumindest eine vorgebbare Anzahl der elektrischen Leiter elektrisch verbindet. Weiterhin betrifft die Erfindung eine dynamoelektrische Maschine mit einem derartigen Kurzschlussläufer und die Verwendung einer derartigen dynamoelektrischen Maschine. Des Weiteren betrifft die Erfindung ein Verfahren zur Herstellung eines derartigen Kurzschlussläufers, in dem durch Stanzen und Paketieren eines Blechpakets ein Kurzschlussläufer geschaffen wird.

Kurzschlussläufer bei dynamoelektrischen rotatorischen Asynchronmaschinen können üblicherweise bis zu einer Umfangsgeschwindigkeit am Rotor von ca. 90 m/s eingesetzt werden. Eine höhere Drehzahleignung ist nur durch besondere Maßnahmen möglich.

Aufgrund der Anforderungen nach immer kompakterer Bauweise bzw. Anwendungen von Direktantrieben zur Einsparung von Getrieben reichen nunmehr die Drehzahlanforderungen bis zu Umfangsgeschwindigkeiten am Rotor von 200 m/s, was z.B. bei einer Achshöhe 160 einer Drehzahl von ca. 25 000 U/min entspricht.

Die Fliehkraftbeanspruchung geht quadratisch zur Drehzahl ein, so dass die Materialbelastung, insbesondere im Kurzschlussring eines Kurzschlussläufers mit einer Drehzahlsteigerung erheblich zunimmt. Als maximal zulässige mechanische Spannungen im Kurzschlussring sind unter Verwendung von gängigen Aluminiummaterialien mit einer Dichte von 2,7 kg/dm³ bis zu ca. 80 N/mm² möglich.

Reines Aluminium hat jedoch bei üblichen Kurzschlussringtemperaturen im Bereich von 150 bis 200°C lediglich eine Zugfestigkeit von maximal 20 N/mm² und scheidet damit als Vergussmasse für die angestrebten hohen Drehzahlbereiche aus.

Kupfer ist aufgrund seiner Dichte von 8,9 kg/dm³ ebenfalls nicht für sehr hohe Drehzahlen geeignet, da bei den angestrebten Drehzahlen und den damit verbundenen Fliehkraftbeanspruchungen die Streckgrenze von Kupfers überschritten wird.

Um außerdem eine hohe Effizienz von dynamoelektrischen Maschine bereitzustellen, sind aber Materialien, wie reines Aluminium (elektrische Leitfähigkeit 36 m/Ω mm²) oder Kupfer (elektrische Leitfähigkeit 56 m/Ω·mm²) hervorragend geeignet. Mit den bekannten Legierungen von Aluminium und Kupfer sind Leitwerte der reinen Vergussmassen von Aluminium und Kupfer nicht zu erreichen.

Um nunmehr derartige Drehzahlbereiche bei gleichzeitiger Effizienz einer dynamoelektrischen Maschine zu erhalten, sind Stützringe aus verschiedensten Materialien am Außendurchmesser eines Kurzschlussrings bekannt. Nachteilig dabei ist, dass der Ring nur nach außen abstützt, das Material im inneren Bereich des Kurzschlussringes jedoch aufgrund der hohen Fliehkräfte und mechanischen Spannungen fließen kann. Damit verändern sich u.a. die Wuchtwerte am Kurzschlussläufer, insbesondere im Kurzschlussring.

Durch den Einsatz von hochfesten Legierungen mit erhöhter Zugfestigkeit bis ca. 80 N/mm² wird ebenfalls versucht, diese hohen Drehzahlen zu erreichen. Nachteilig dabei ist, dass die elektrische Leitfähigkeit bei Werten von 20 bis 29 m/Ω·mm² liegt und damit wesentlich niedriger angesiedelt ist als beim reinen Aluminium. Aufgrund der höheren Sprödigkeit dieser Legierungen ist auch die Dehnfähigkeit geringer, womit die Anfälligkeit bezüglich mechanischer Spannungsrisse am Kurzschlussring steigt.

Bei den Legierungen im Schmelztiegel kommt es außerdem zu Ausscheidungen von Legierungsbestandteilen, die je nach dem Strontium, Silicium, Mangan usw. sein können.

Dadurch reduziert sich wiederum die Qualität der Schmelze im Bezug auf die elektrische Leitfähigkeit und die mechanische Festigkeitswerte. Die Prozesssicherheit und Prozessqualität des Druckgießens ist somit äußerst schwierig aufrecht zu erhalten. Dies geschieht z.B. durch ständige Analyse von Proben aus der Schmelze, sowie durch ein dadurch erforderliches Nachlegieren, indem die Legierungsbestandteile zugesetzt und durch Rührwerke möglichst gleichmäßig verteilt werden.

Ein Vergießen unter Schutzgas bedeutet zudem erheblichen Mehraufwand. Besonders bei Antrieben in der Kfz-Industrie ist diese Methode aufgrund der geforderten Prozesssicherheiten mit sehr hohem Aufwand und Kosten verbunden und erreicht daher in der Asynchron- und Rotortechnik vergleichsweise wenig Akzeptanz.

Ausgehend davon liegt der Erfindung die Aufgabe zugrunde, eine dynamoelektrische Maschine zu schaffen, insbesondere eine Asynchronmaschine, mit Kurzschlussläufer, die für hohe Umfangsgeschwindigkeiten am Rotor geeignet ist, insbesondere bis zu 200 m/s und bei vergleichsweise hoher Effizienz einen geeigneten Antrieb für die Antriebstechnik u.a. in Fahrzeugen als auch bei Werkzeugmaschinen bietet.

Die Lösung der gestellten Aufgabe gelingt durch einen Kurzschlussläufer einer Asynchronmaschine mit elektrischen Leitern, die in im Wesentlichen axial verlaufenden Nuten eines Blechpakets vorgesehen sind, wobei an jeder Stirnseite des Blechpakets zumindest ein Kurzschlussring vorgesehen ist, der zumindest eine vorgegebene Anzahl der elektrischen Leiter elektrisch verbindet, wobei der Kurzschlussring eine Armierung aus vergleichsweise hochfesten Material aufweist.

Die Lösung der gestellten Aufgabe gelingt auch durch eine dynamoelektrische Maschine, insbesondere Asynchronmaschine mit einem erfindungsgemäßen Kurzschlussläufer.

Die Lösung der gestellten Aufgabe gelingt auch durch eine Werkzeugmaschine, einen E-Car, einen Kompressorantrieb oder einen Pumpenantrieb mit zumindest einer dynamoelektrischen Maschine mit einem erfindungsgemäßen Kurzschlussläufer.

Die Lösung der gestellten Aufgabe gelingt ebenfalls durch ein Verfahren zur Herstellung eines Kurzschlussläufers durch folgende Schritte:
- Stanzen und Paketieren eines Blechpakets des Kurzschlussläufers,
- Fixieren einer geeigneten Armierung an den Stirnseiten des Blechpakets,
- Einspritzen einer leitfähigen Vergussmasse über zumindest einen Einspritzkanal in die Armierung und die Nutenräume des Blechpakets.

Die oben genannten Nachteile werden erfindungsgemäß durch eine Armierung in den Bereichen des Kurzschlussringes vermieden. Diese Armierung wird aufgrund seiner Struktur vorzugsweise in einem Additiv-Manufacturing-Verfahren (3D-Druck-Verfahren) oder mittels kombinierter Stanz-Tiefziehteile angefertigt und vor dem Ausgießen des Kurzschlusskäfigs im Blechpaket in das Druckgießwerkzeug eingelegt.

Damit können nun für die Armierung Metalle mit sehr hoher Zugfestigkeit verwendet werden, wie z.B. Titan, Stahl. Die Armierung ist am Außen- und am Innendurchmesser, als auch auf den Stirnseiten des Kurzschlussringes möglichst geschlossen ausgebildet. Dazwischen ist ein feines Geflecht, eine Gerüststruktur oder Gitterstruktur oder eine mikroskalige Struktur vorgesehen, die dem Kurzschlussring im Betrieb den nötigen Halt verleiht, jedoch aufgrund seines vergleichsweise geringen Volumenanteils von ca. 5 bis 10% eine ausreichende Effizienz der Asynchronmaschine gewährleistet. Der Stromfluss wird dabei nur unwesentlich behindert.

Während Außen- und Innendurchmesser der Armierung geschlossen ausgeführt sind, sind vorteilhafterweise an den Seitenflächen, also den Flächen die vom Blechpaket wegweisen, kleine Öffnungen zu Entgasung während des Druckgießprozesses vorgesehen, womit eine schädliche Lunkerbildung während des Gießprozesses vermieden wird. Auf den Seitenflächen in Richtung Blechpaket sind zusätzlich die für die elektrischen Leiter vorgesehenen Ausnehmungen vorgesehen.

Die Erfindung eignet sich auch für einen Käfigaufbau, bei dem in Nuten des Blechpakets bereits vorgefertigte Kupferstäbe eingelegt werden, die vorteilhafterweise axial an den Stirnseiten des Blechpakets herausragen und in die Armierung hineinragen, so dass durch einen anschließenden Vergussvorgang z.B. durch Aluminium diese Kupferstäbe nunmehr in Aluminium eingebettet sind, wohingegen der Kurzschlussring nahezu von Aluminium durchsetzt wird und durch die Armierung bei hohen Drehzahlen gehalten wird.

Die Armierung kann bei der Herstellung in diesem Fall zusätzlich die Funktion übernehmen, die Leiterstäbe insbesondere radial und einheitlich während des Druckgießens nach Innen und Außen zu fixieren.

Durch dieses erfindungsgemäße Verfahren zur Herstellung und den Aufbau des Käfigläufers ist es nunmehr möglich, mit einer Vergussmasse aus reinem Aluminium 99,7 zu arbeiten. Die oben genannten Nachteile unter Verwendung einer Legierung können somit vermieden werden. Die elektrische Leitfähigkeit ist nunmehr wesentlich höher als bei den aufgeführten Legierungen. Außerdem ist eine gleichmäßig verteilte homogene Armierung im Kurzschlussring vorhanden, die in allen Bereichen diesen stabilisiert.

Eine Veränderung bzw. Fließen durch hohe Fliehkräfte am äußeren oder inneren Bereich des Kurzschlussringes wird dadurch sicher vermieden. Durch den geschlossenen Innenringbereich der Armierung wird ein zusätzlicher Halt erzielt, der einer Aufweitung des Kurzschlussringes gegenwirkt.

Durch einen geschlossenen Außenring sowie einer geschlossenen Fläche an zumindest einer Stirnseiten der Armierung wird auch der Außenbereich des Kurzschlussrings vor unzulässiger Veränderung und Aufweitung vor allem im hohen Drehzahlbereich geschützt.

Bei mittelhohen Drehzahlen ist es gegebenenfalls sinnvoll, eine derartige Armierung oder Gitterstruktur nur am radialen Rand des äußeren Bereichs des Kurzschlussrings vorzusehen.

Durch den erfindungsgemäßen Aufbau des Kurzschlussläufers, insbesondere der Kurzschlussringe wird ein vergleichsweise hoher Wirkungsgrad erreicht, der bei reinem Aluminium als Vergussmasse und den erforderlichen Drehzahlen nicht erreicht werden kann.

Unwuchten des Kurzschlussläufers während des Herstellvorganges und im Betrieb der dynamoelektrischen Maschine werden vermieden, da diese homogene Stabilisierung des Kurzschlussringes eine dauerhafte Stabilisierung gewährleistet.

Der erfindungsgemäße Gedanke ist für alle Käfige von Kurzschlussläufern geeignet, seien es klassische Aluminiumkäfige, Hybridkäfige, d.h. Cu-Leiterstäbe in Aluminium eingebettet, wobei der Kurzschlussring im Wesentlichen aus Aluminium bestehet oder Kupferkäfige. Der erfindungsgemäße Gedanke ist auch für spezielle Kurzschlussläufer (z.B. Doppel- oder Mehrfachkäfigläufer mit voneinander isolierten Käfigen) geeignet.

Die Erfindung sowie vorteilhafte Ausgestaltungen der Erfindung werden anhand prinzipiell dargestellter Ausführungsbeispiele näher erläutert. Darin zeigen:
- FIG 1: einen Längsschnitt einer Asynchronmaschine,
- FIG 2: eine perspektivische Darstellung einer Armierung,
- FIG 3: eine weitere perspektivische Darstellung der Armierung,
- FIG 4: eine Detaildarstellung der Gitterstruktur innerhalb der Armierung,
- FIG 5: eine teilperspektivische Darstellung eines Schnittes durch das leitfähige Material nach einem Druckgießvorgang,
- FIG 6: teilperspektivische Darstellung von Einzelscheiben,
- FIG 7: eine Explosionsdarstellung von Einzelscheiben,
- FIG 8: eine Gesamtansicht einer Armierung, hergestellt durch Einzelscheiben, und
- FIG 9: eine zusammengesetzte Armierung aus Tiefziehblechen.

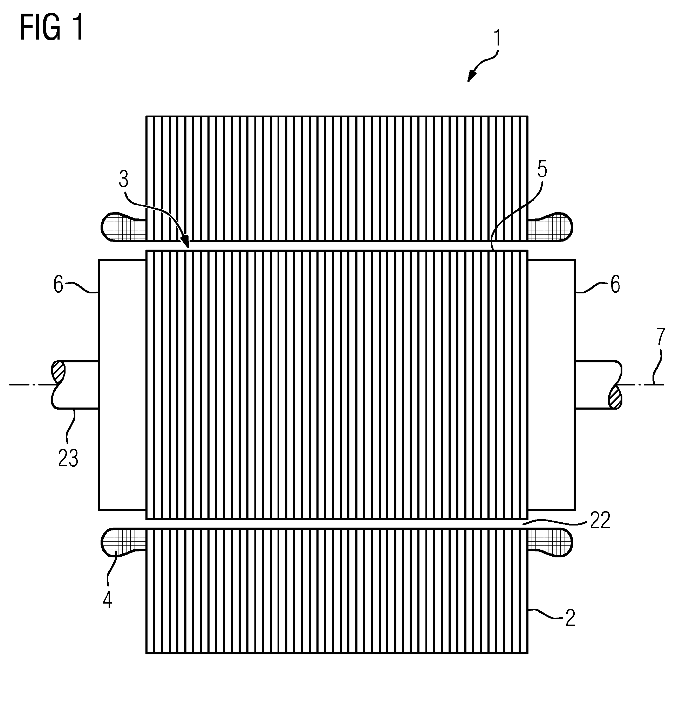

FIG 1 zeigt in einer prinzipiellen Darstellung einen Längsschnitt einer dynamoelektrischen Maschine 1, insbesondere einer Asynchronmaschine mit einem Kurzschlussläufer 3. Der Stator 2 weist ein Wicklungssystem 4 auf, das an den Stirnseiten des Stators 2 Wickelköpfe ausbildet.

Über einen Luftspalt 22 tritt im Betrieb der Asynchronmaschine eine elektromagnetische Wechselwirkung zwischen Stator 2 und Kurzschlussläufer 3 ein, der eine Drehung des Kurzschlussläufers 3 um eine Achse 7 bewirkt. Ein Blechpaket 5 des Kurzschlussläufers 3 ist dabei drehfest mit einer Welle 23 verbunden.

Der Kurzschlussläufer 3 weist Nuten auf, die in ihrem axialen Verlauf nahezu achsparallel oder leicht geschrägt - bis zu ca. zwei Nutabständen - ausgeführt sind. In den Nuten befinden sich in dieser Darstellung nicht näher dargestellte elektrische Leiter, die mit den Kurzschlussringen 6 des Kurzschlussläufers 3 elektrisch leitend verbunden sind.

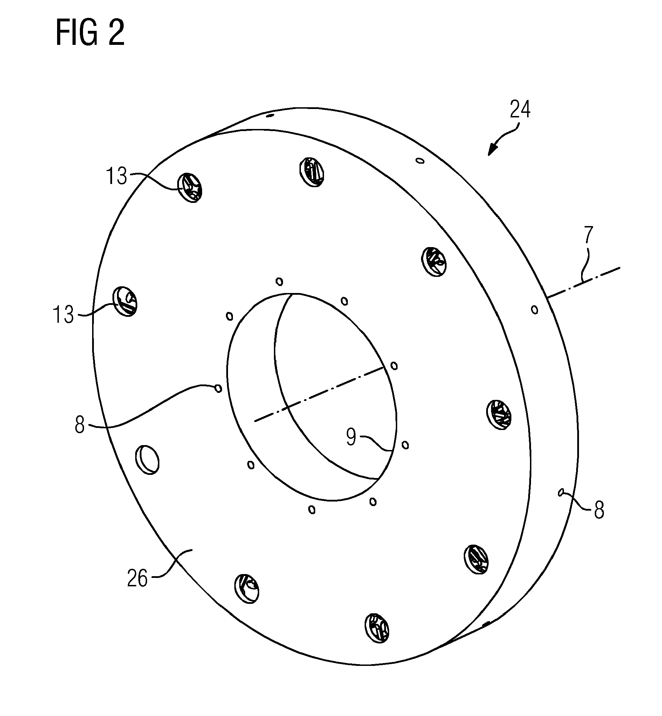

Um den Kurzschlussläufer 3 auch bei hohen Drehzahlen bis zu 200 m/s Umfangsgeschwindigkeit einsetzen zu können, weist der Kurzschlussring 6 eine Armierung 24 gemäß FIG 2 auf, die aus einer Außenkontur 10, einer Innenkontur 9 und den dazu erforderlichen Seitenflächen 25 für außen und Seitenflächen 26 für innen, also zum Blechpaket hingewandt, zusammensetzt. Des Weiteren sind an der Außenkontur 10 und/oder an der Seitenfläche 25, 26 verteilt Aussparungen 8 zur Entlüftung vorgesehen, die während Druckgießprozess den Gießprozess qualitativ verbessern.

Des Weiteren sind an der Seitenfläche 25 Einspritzkanäle 13 vorgesehen, um das elektrische flüssige Material in die Armierung als auch die Nutenräume des Blechpakets 5 eingeben zu können.

FIG 2 zeigt außerdem die Armierung 24 des Kurzschlussringes 6, der an den Stirnseiten des Blechpakets 5 des Kurzschlussläufers 3 vor der Fertigung, insbesondere dem Gießvorgang positioniert wird. Die Einspritzkanäle 13 sind in dieser Darstellung rund, können aber je nach Anforderung an die Nutform des Kurzschlussläufers 3 auch tropfenförmig etc. ausgebildet sein, um einen möglichst großen Strömungskanal bei der Fertigung bereit zu stellen. Die Nutform kann dabei je nach Anforderung (Stromverdrängungseffekte) an den Kurzschlussläufer 3 rundlich, tropfenförmig, trapezförmig etc. ausgeführt sein.

Die Armierung 24 muss nicht zwangsläufig direkt am der Stirnseite des Blechpakets 5 anliegen. Um einen von der Stirnseite beabstandeten Kurzschlussring 6 zu erhalten sind Zwischenelemente einsetzbar, die ggf. nach dem Gießvorgang entnommen werden können.

Über eine der Armierungen 24 erfolgt der gesamte Gießvorgang, so dass zumindest auf einer Stirnseite 26 einer Armierung 24 eine Materialzugangsöffnung vorgesehen ist.

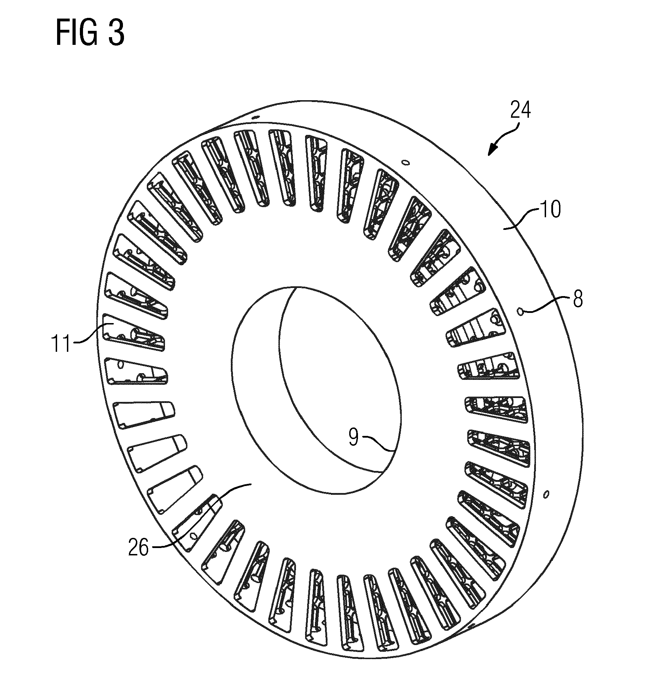

FIG 3 zeigt eine Armierung 24 des Kurzschlussrings 6 aus der Sicht des Blechpakets 5. Die dem Blechpaket 5 zugewandten Seitenfläche 26 weist Öffnungen 11 auf, die zur Aufnahme der elektrischen Leiter, sei es für den Gießvorgang und/oder als Formstäbe eingelegt, dienen. Auf dieser Seitenfläche 26 sind keine Aussparungen zur Entlüftung vorhanden.

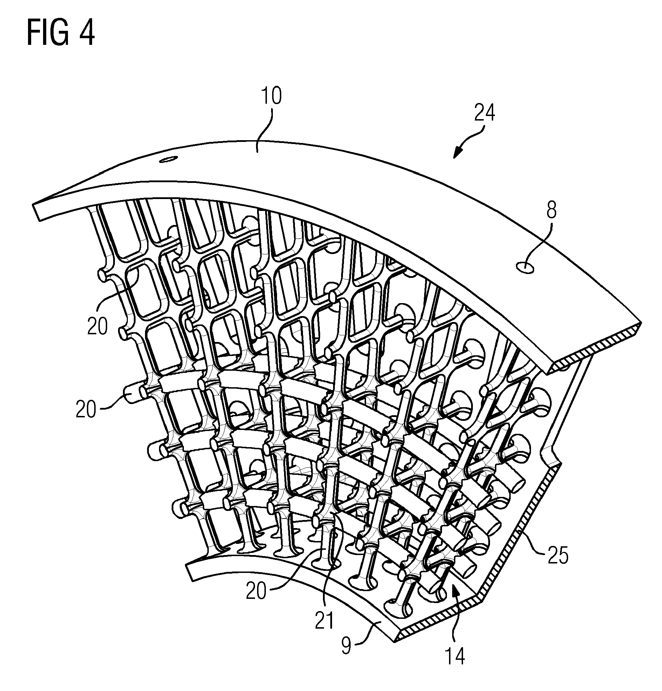

FIG 4 zeigt in einem Teilausschnitt der Armierung 24 die Außenkontur 10, als auch die Innenkontur 9 und die innerhalb dieser Konturen und den Seitenflächen 25, 26 vorhandene Gitterstruktur 14. Diese Gitterstruktur 14 hat eine stützende Funktion des Leitermaterials innerhalb des Kurzschlussringes 6, insbesondere bei hohen Drehzahlen. Die dort gezeigte Gitterstruktur 14 weist Stege 20 auf, die an Knoten 21 zusammen geführt sind.

Die Grundstruktur ist dabei wie folgt aufgebaut: Ausgehend von der Innenseite der Innenkontur 9 erstrecken sich radiale Stege 20 zur Innenseite der Außenkontur 10, wobei sowohl in Umfangsrichtung als auch in radialer und oder axialer Richtung weitere Stege 20 vorgesehen sind. An den Kreuzungspunkten der Stege 20 sind Knoten 21, die zur Stabilisierung der ganzen Gitterstruktur 14 innerhalb der Armierung 24 dienen.

Die Armierung 24 ist aufgrund der aufwändigen, insbesondere mikroskaligen Gitterstruktur 14 mit additiven Herstellverfahren fertigt. Durch die auch als 3-D-Druck-Verfahren bezeichnete Herstellungsmethoden lassen somit komplizierte einstückige Armierungen aus einem oder mehreren zugfesten Materialien wie Stahl und/oder Titan herstellen.

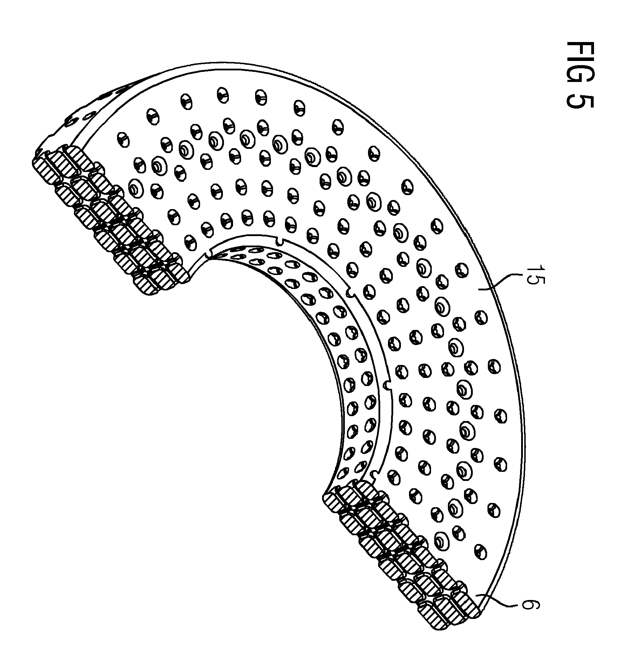

In die Armierung 24 wird nun durch ein Druckgussverfahren das elektrisch leitende Material eingegeben, beispielsweise flüssiges Aluminium, das dann das von der Gitterstruktur 14 nicht eingenommenen Volumen einnimmt. Es ergibt sich dabei eine Struktur des Leitermaterials gemäß FIG 5, die einen "halben" Kurzschlussring 6, ohne die stützende Gitterstruktur 14 zeigt.

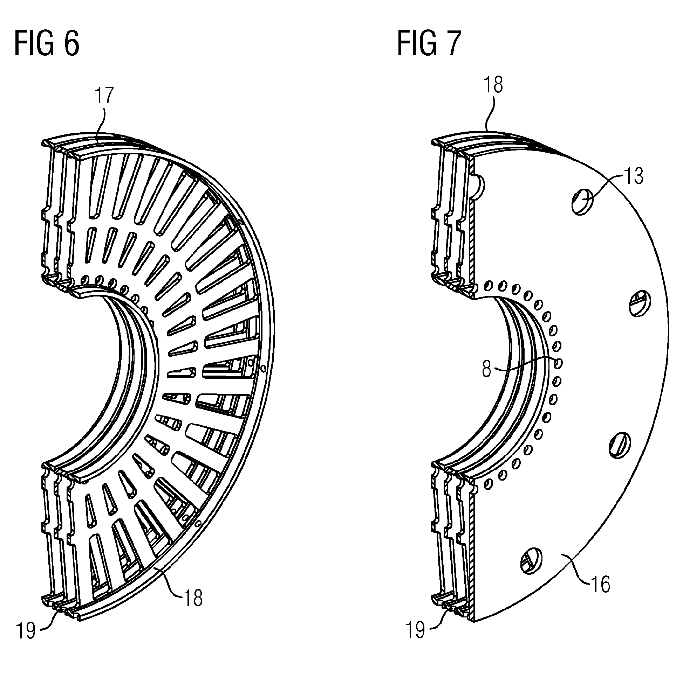

FIG 6 bzw. FIG 7 zeigt in einer weiteren Ausführungsform die Bildung einer anderen Art von Gitterstruktur 14 in dem einzelne Tiefziehbleche gleicher oder unterschiedlicher Struktur axial hintereinander angeordnet eine Gitterstruktur generieren. Auch dort sind ebenso Aussparungen 8 zur Entlüftung vorhanden, wie auch die Einspritzkanäle 13 vorgesehen. Die Innenkontur 9 wird durch das axiale hintereinander setzen der Einzelbleche mittels eines Zentrierrandes 19 generiert, ebenso die Außenkontur 10. Es ergibt sich somit ebenfalls eine Armierung 24, die eine Außenkontur 10, eine Innenkontur 9, als auch die Seitenflächen 25 und 26 aufweist. Die Gitterstruktur 14 innerhalb dieser Armierung ist mit einem Stanz-Tiefziehverfahren hergestellt und damit bzgl. der Struktur zwar anders ausgebildet, aber mit gleichen Eigenschaften ausgestattet, wie die oben beschriebene Armierung 24.

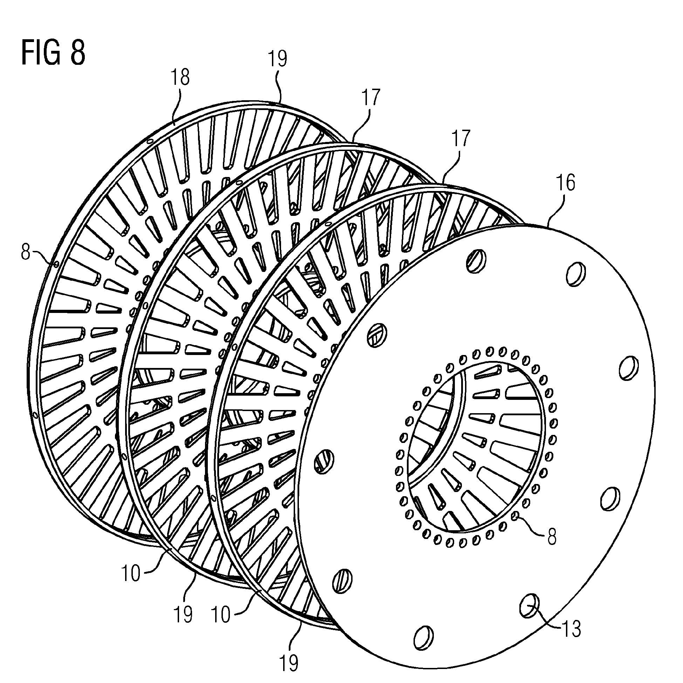

Dies ist insbesondere der auch FIG 8 zu entnehmen, wo in einer Explosionsdarstellung die Seitenflächen 25, 26 als Tiefziehblech außen und als Tiefziehblech innen bezeichnet wurden. Die Tiefziehbleche 17 in der Mitte, bilden mit ihren Zentrierrändern 19 einen Teil der Innenkontur und der Außenkontur, wobei jedes Tiefziehblech 17 in der Mitte im Wesentlich radiale Stege 20 als auch umlaufende Stege aufweist. Knoten im Sinne dieser Gitterstruktur 14 führen lediglich Stege 20 in radialer und in Umfangsrichtung zusammen.

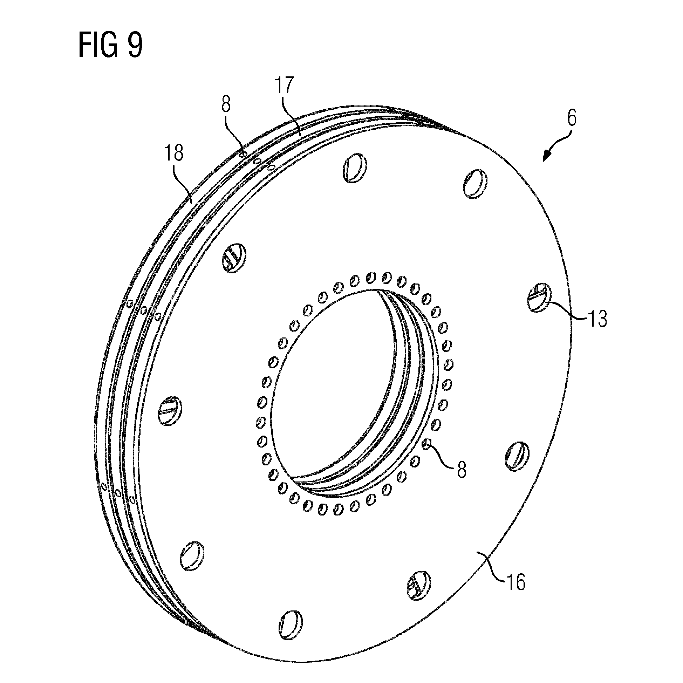

FIG 9 zeigt zusammengesetzt eine Armierung 24 des Kurzschlussringes 6 aus Tiefziehblechen, die ebenfalls Entlüftungsaussparungen 8 als auch zumindest bei einer Armierung Einspritzkanäle 13 aufweisen.

Der Kurzschlussläufer 6 weist somit an seinen Stirnseiten zumindest jeweils eine Armierung 24 aus zugfestem Material auf. Innerhalb der Armierung 24 und in zumindest Teilen der Nutenräume ist mittels eines Vergussprozesses leitfähiges Material vorhanden.

Falls die Nutenräume nicht komplett ausgegossen sind, wurden vorher in diese Nutenräume vorgefertigte Leiterstäbe z.B. aus Kupfer positioniert, die axial aus den Stirnseiten des Blechpakets 5 in die Armierung 24 ragen. Die verbleibenden Hohlräume in den Nuten und der Armierung 24 werden im weiteren Herstellungsprozess durch eine leitfähige Vergussmasse wie Aluminium oder Kupfer eingenommen.

Der erfindungsgemäße Kurzschlussläufer 6 eignet sich vor allem für Anwendungen einer Asynchronmaschine im Hochdrehzahlbereich, d.h. bei Drehzahlen von Umfangsgeschwindigkeiten am Rotor von bis zu 200 m/s, wie z.B. bei Antrieben in der Fahrzeugtechnik, wie z.B. bei E-Cars, aber auch in der Werkzeugmaschinentechnik oder bei Pumpen- und Kompressorantrieben.

## Patentansprüche

1. Kurzschlussläufer (3) einer Asynchronmaschine (1) mit elektrischen Leitern, die in im Wesentlichen axial verlaufenden Nuten eines Blechpakets (5) vorgesehen sind, wobei an jeder Stirnseite des Blechpakets (5) zumindest ein Kurzschlussring (6) vorgesehen ist, der zumindest eine vorgegebene Anzahl der elektrischen Leiter elektrisch verbindet, wobei der Kurzschlussring (6) eine Armierung (24) aus vergleichsweise zugfesten Material aufweist.

2. Kurzschlussläufer (3) nach Anspruch 1, **dadurch gekennzeichnet , dass** die elektrischen Leiter in der Nut aus Aluminium und/oder Kupfer sind.

3. Kurzschlussläufer (3) nach einem der vorhergehenden Ansprüche, **dadurch gekennzeichnet, dass** die Armierung (24) eine nahezu geschlossene Kontur mit innerer Gitterstruktur (14) aufweist.

4. Kurzschlussläufer (3) nach Anspruch 3, **dadurch gekennzeichnet, dass** sich die Gitterstruktur (14) sich zumindest im radial äußeren Bereich des Kurzschlussrings (6) befindet.

5. Kurzschlussläufer (3) nach einem der vorhergehenden Ansprüche, **dadurch gekennzeichnet , dass** die Armierung (24) durch Additiv-Manufacturing hergestellt worden ist.

6. Kurzschlussläufer (3) nach einem der Ansprüche 1 bis 4, **dadurch gekennzeichnet, dass** die Armierung (24) durch axial hintereinander angeordnete Einzelscheiben (16,17,18), die im Stanz-Tiefziehverfahren gebildet ist.

7. Dynamoelektrische Maschine (1), insbesondere Asynchronmaschine mit einem Kurzschlussläufer (3) nach einem der vorhergehenden Ansprüche.

8. Werkzeugmaschine, E-Car, Kompressorantrieb oder Pumpenantrieb mit zumindest einer dynamoelektrischen Maschine (1) nach Anspruch 7.

9. Verfahren zur Herstellung eines Kurzschlussläufers (3) durch folgende Schritte:
- Stanzen und Paketieren eines Blechpakets (5) des Kurzschlussläufers (3),
- Fixieren einer geeigneten Armierung (24) an den Stirnseiten des Blechpakets (5),
- Einspritzen einer leitfähigen Vergussmasse über zumindest einen Einspritzkanal (13) in die Armierungen (24) und die Nutenräume des Blechpakets (5).

10. Verfahren zur Herstellung eines Kurzschlussläufers (3) nach Anspruch 9, **dadurch gekennzeich**n e t , dass in den Nutenräumen vor dem Einspritzen der Vergussmasse elektrisch leitfähige Stäbe eingelegt werden.

11. Verfahren zur Herstellung eines Kurzschlussläufers (3) nach Anspruch 10, **dadurch gekennzeich**n e t , dass zumindest einige leitfähige Stäbe axial über die Stirnseiten des Blechpakets (5) bis in die Armierung (24) ragen.
